# EUROPEAN PATENT APPLICATION

(11) **EP 2 489 916 A1**
(43) Date of publication of application: **22.08.2012**
(21) Application number: 10823061.6
(22) Date of filing: 11.10.2010
(51) Int. Cl.: F16L 33/22

(54) **SOFT PIPE CONNECTING DEVICE**

(30) Priority: 12.10.2009 CN 200920237051 U
(71) Applicant: Liang, Guangren, Guangzhou, Guangdong 510000 (CN)
(72) Inventor: Liang, Guangren, Guangzhou, Guangdong 510000 (CN)
(74) Representative: Kramer - Barske - Schmidtchen
(86) International application number: PCT/CN2010/077652
(87) International publication number: WO 2011/044831

(57) **Abstract**

A hose connection device, comprising: the cylindrical joint, the outside wall of the cylindrical joint in turn has a limit baffle, groove and tooth tip toward several of the groove side of the inverted tooth ; the fixed sleeve that is built- in connector to support the joints ; the expandable outer ring that is sheathed in the outer hose to press the hose in the joints on the outer wall surface, the inner wall surface of the outer ring has a bulge corresponding to the described in the groove of the connector location, the reverse of a plurality of inverted tooth to match corresponding the inverted tooth the cylindrical joint. The groove can have a sealing ring. The limit baffle of the joint can effectively prevent the joint and the hose to the limit baffle direction slide, generate gap, avoid the occurrence of gas or liquid leakage.

## Description

### FIELD OF THE UTILITY MODEL

The present utility model relates to a connection device, and more specifically to a connection device connected to the hose or hose and rigid pipe between.

### BACKGROUND OF THE UTILITY MODEL

At present, we adopt connection device to joint flexible hoses and rigid tubes. Usually, the connection manner between the flexible hose and connection device is to paste the flexible hose on the joint of the connection device, and fasten the flexible hose with metal or plastic lantern ring, or to fit the flexible hose over the joint and fasten it with clip which give the pressure to change the shape of the wall of hose and fix the hose tube. However, for the valid time of glue and the possibility of crevice, the former manner is relatively complex and prone to gas or liquor leakage. And the later manner can be limited that, when the wall of hose is thin, such as below 0.16CM, its shape will change little under the pressure of clip which situation may causes the leakage of gas or liquor. It might be worse when the connection position of hose and joint is short and narrow.

### SUMMARY OF THE UTILITY MODEL

In order to overcome the disadvantages of the prior art, the present utility model provides a hose connection device that is a connection close, good sealing, easy to operate connected devices.

To achieve these goals, the present utility model to provide a hose connected device, comprising: the cylindrical joint, the outside wall of the cylindrical joint in turn has a limit baffle, groove and tooth tip toward several of the groove side of the inverted tooth ; the fixed sleeve that is built- in connector to support the joints ; the expandable outer ring that is sheathed in the outer hose to press the hose in the joints on the outer wall surface, the inner wall surface of the outer ring has a bulge corresponding to the described in the groove of the connector location, the reverse of a plurality of inverted tooth to match corresponding the inverted tooth the cylindrical joint, under the normal state, the outer ring diameter is less than the diameter of the cylindrical joint, under the external force, the outer ring expansion and deformation diameter greater than the diameter of the cylindrical joint, the hose can be sheathed on the joints on the outer wall surface, the bulge is in the groove, the inverted tooth the cylindrical joint and the inverted tooth that is in the inner wall surface of the outer ring are mutually engaged.

The case may be preferred for the following program:
the groove has a sealing ring to enhance the seal of the hose and the joint;
the outer ring of material is plastic or metal;
the outer ring of material is nylon;
the shape of the fixed sleeve is circular, the center of the fixed sleeve has a hole.

The utility model utilizes the outer ring of the barbed hose barb pressed in the joint, in order to achieve the sealing purpose, especially for the surface is not smooth enough, the unevenness of the thickness of the hose.

When used, the outer ring is sleeved on the hose, the hose is sheathed on the joint, and then through the external mechanical force, the outer ring is to the direction of the joint, outer ring in the external force radial expansion deformation, extrusion and crossed joint inverted teeth, until the bulge of outer ring falls into the groove of the joint , at the same time, the inverted teeth of the joint and the inverted tooth of the outer ring are mutually engaged, clamped in the concave ring on the hose to effectively prevent the hose from the joint spondylolisthesis. The limit baffle of the joint can effectively prevent the joint and the hose to the limit baffle direction slide, generate gap, avoid the occurrence of gas or liquid leakage.

Through the above structure design, improve the thin wall hose and fittings are connected between the tightness, sealing effect, effectively preventing the gas and liquid leakage, moreover, is simple and convenient for installation, more practical.

### DESCRIPTION OF THE DRAWINGS

FIG. 1 is an exploded view of the first embodiment in accordance with the present utility model;
FIG.2 is a structural diagram of the first embodiment of the of FIG. 1 after the installation in accordance with the present utility model;
FIG. 3 is a schematic diagram of the A-A part of FIG. 2 in accordance with the present utility model;
FIG. 4 is an exploded view of the second embodiment in accordance with the present utility model;
FIG.5 is a structural diagram of the second embodiment of the of FIG. 4 after the installation in accordance with the present utility model;
FIG. 6 is a schematic diagram of the B-B part of FIG. 5 in accordance with the present utility model.

### DETAILED DESCRIPTION OF THE UTILITY MODEL

The following illustrations are further explanations of the utility model, with the instructions of the figures.

### The first embodiment:

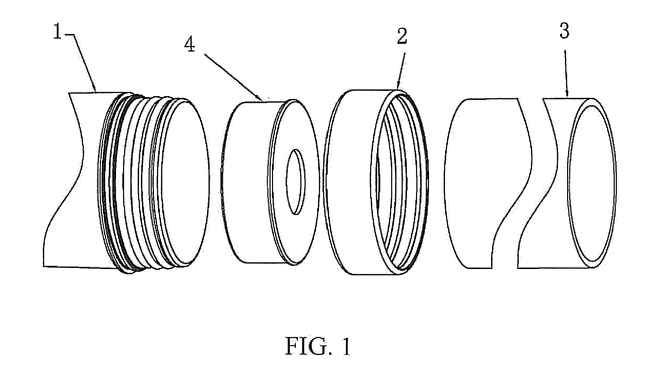

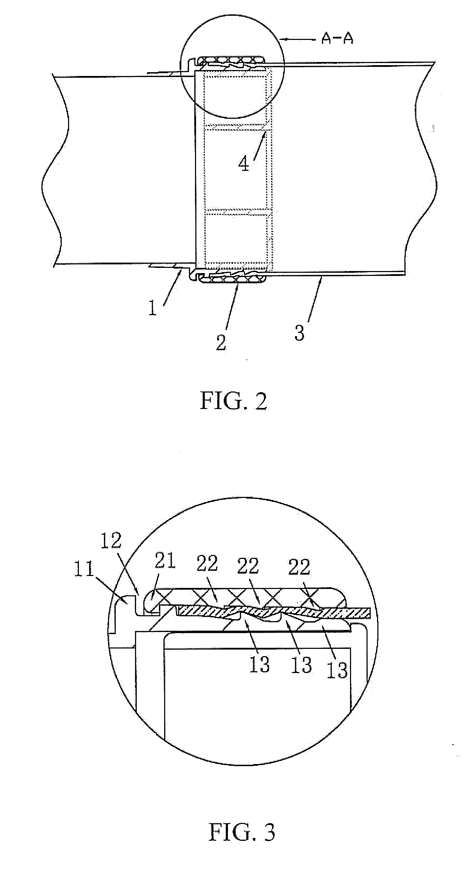

Referring to FIGS. 1-3, the hose connection device of the first embodiment comprises a cylindrical joint 1, outer ring 2 and a fixed sleeve 4. The fixed sleeve 4 is built-in connector to support the joint 1, when the outer ring 2 that is sheathed on the joint 1 generates of radial pressure to the joint 1 to prevent the joint 1 radial deformation. The outside wall of the cylindrical joint 1 in turn has a limit baffle 11, groove 12 and Tooth tip towards the groove 12 side of the two inverted teeth 13. The outer ring 2 is of by the expandable material, such as plastic or metal, the embodiments preferably nylon, the inner wall surface of the outer ring 2 has a bulge 21 corresponding to the groove 12 of the connector location of the joint 1, the reverse of two inverted tooth 22 to match corresponding the inverted tooth 13 of the joint 1. Under the normal state, the outer ring 2 diameter is less than the diameter of the joint 1.

When used, the outer ring 2 is sleeved on the hose 3, the hose 3 is sheathed on the joint 1, and then through the external mechanical force, the outer ring 2 is to the direction of the joint 1, outer ring 2 in the external force radial expansion deformation, extrusion and crossed inverted teeth 13 of the joint 1, until the bulge 21 of outer ring 2 falls into the groove 12 of the joint 1, at the same time, the inverted teeth 13 of the joint 1 and the inverted tooth 22 of the outer ring 2 are mutually engaged, clamped in the concave ring on the hose 3 to effectively prevent the hose 3 from the joint 1 spondylolisthesis. The limit baffle 11 of the joint 1 can effectively prevent the joint 1 and the hose 3 to the limit baffle 11 direction slide, generate gap, avoid the occurrence of gas or liquid leakage.

### The second embodiment:

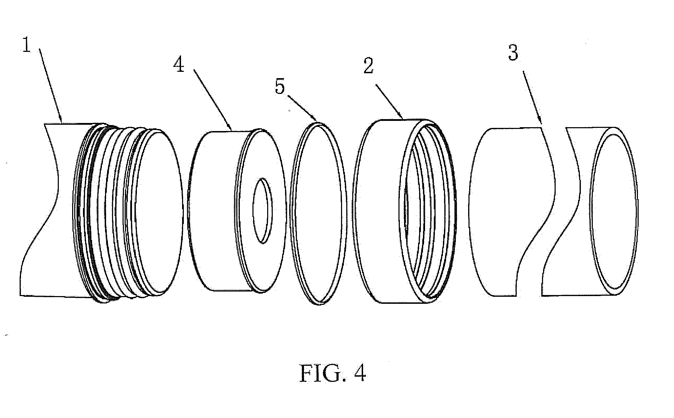

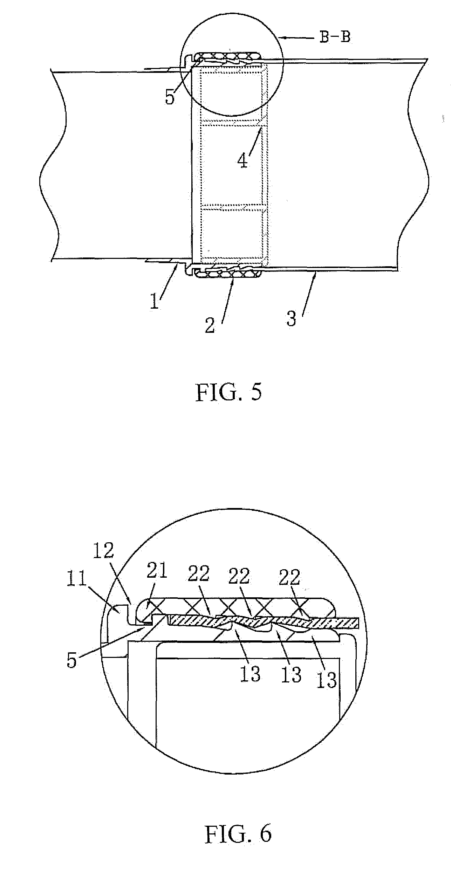

Referring to FIGS.4-6, the structure of the second embodiment and the first embodiment are basically the same. Only on the basis of the first embodiment, adding a sealing ring 5, which is in the groove 12 of the joint 1, can enhance the hose 3 and the joint 1 connection sealing effect.

It should be noted that, the present utility model is mainly in accordance of a hose connection device. Any structure and mounting method relates to this invention is in the scope of the utility model protection issues. While the present utility model has been illustrated by the above description of the preferred embodiments thereof, while the preferred embodiments have been described in considerable detail, it is not intended to restrict or in any way limit the scope of the appended claims to such details. Other advantages and modifications within the spirit and scope of the present utility model will readily appear to those skilled in the art. Therefore, the present utility model is not limited to the specific details and the illustrative examples shown and described.

## Claims

1. A hose connection device, wherein, comprising:
the cylindrical joint, the outside wall of the cylindrical joint in turn has a limit baffle, groove and tooth tip toward several of the groove side of the inverted tooth ;
the fixed sleeve that is built- in connector to support the joint ;
the expandable outer ring that is sheathed in the outer hose to press the hose in the joints on the outer wall surface, the inner wall surface of the outer ring has a bulge corresponding to the groove of the connector location, the reverse of a plurality of inverted tooth to match corresponding the inverted tooth of the cylindrical joint, under the normal state, the outer ring diameter is less than the diameter of the cylindrical joint, under the external force, the outer ring expansion and deformation diameter greater than the diameter of the cylindrical joint, the hose can be sheathed on the joints on the outer wall surface, the bulge is in the groove, the inverted tooth the cylindrical joint and the inverted tooth that is in the inner wall surface of the outer ring are mutually engaged.

2. The hose connection device of claim 1, wherein the groove has a sealing ring.

3. The hose connection device of claim 1, wherein the outer ring of material is plastic or metal.

4. The hose connection device of claim 3, wherein the outer ring of material is nylon.

5. The hose connection device of claim 1, wherein the shape of the fixed sleeve is circular, the center of the fixed sleeve has a hole.
